# EUROPEAN PATENT APPLICATION

(11) **EP 2 426 364 A1**
(43) Date of publication of application: **07.03.2012**
(21) Application number: 10769651.0
(22) Date of filing: 21.04.2010
(51) Int. Cl.: F16B 2/16, F16B 1/02, F16G 13/16, H02G 3/30

(54) **CLAMP DEVICE USING CHAIN**

(30) Priority: 27.04.2009 JP 2009107602
(71) Applicant: Sumita Co., Ltd., Ishikawa 922-0336 (JP)
(72) Inventor: SUMIDA Susumu, Kaga-shi Ishikawa 922-0336 (JP); SUMIDA Yuji, Kaga-shi Ishikawa 922-0336 (JP)
(86) International application number: PCT/JP2010/057063
(87) International publication number: WO 2010/125952

(57) **Abstract**

Disclosed is a device configured to clamp a bar member (2) by inserting the bar member (2) through a through hole formed by bending a chain (1) including inner link plates (4) and outer link plates (3) connected via pins (5) so as to be freely bendable into a saw-tooth shape, fixing an end (A) of the chain 1 and clamping the bar member (2) by the pins (5) in a state of blocking the bar member (2) from being pulled out toward the other free end (B), the bar member (2) can be strongly clamped by forming the pins (5, 5...) in non-circular shape in cross section.

## Description

### TECHNICAL FIELD

The present invention relates to a clamping device using a chain, which is a multi-joint member bendable at a constant pitch between axes.

### BACKGROUND ART

A chain having a plurality of outer link plates and inner link plates coupled so as to be bendable are generally used for transmitting motive power. In other words, the chain is entrained around both sprockets, and a driven sprocket is capable of rotating in response to the rotation of a driving sprocket. For reference sake, it is possible to configure a clamping device by using this chain.

A "chain-type adjustable clamping device" according to JP-A-59-69510 (Japanese Patent No.1667769) is one of clamping devices having the chain as a component in the prior art. Incidentally, the "chain-type adjustable clamping device" includes at least link plates provided on both side surfaces and pins for coupling both end portions thereof, and is configured in such a manner that a chain defining a rectangular space therebetween is bent into a saw-tooth shape to form a through hole, a bar member having a predetermined thickness is inserted through the through hole, and one end of the above-described chain is fixed to a case and a spring or the like is connected to the other end to exert a resilient force in the direction of expansion of the chain, so that the movement of the bar member in the direction opposite from the above-described fixed end can be clamped.

Incidentally, the pin at the center of bending of the chain is fitted with a bush, and a roller is axially supported around the bush so as to be rotatable. Therefore, the size of the through hole formed by bending the chain in the saw-tooth shape is reduced, and hence the thickness of the bar member to be inserted through the through hole is inevitably limited to a thin one. In order to allow insertion of a bar member having a predetermined thickness through the through hole, a chain having a large pitch must be used. In contrast, the rollers axially supported by the bushes may be rotated and hence the clamping strength may be loosened.

By allowing the bar member to insert through the through hole formed by the chain bent in the saw-tooth shape, fixing one end of the chain and pulling the bar member in the direction of the other end, the rollers engage the surface of the bar member and the bar member is clamped. In this case, if the rollers, being axially supported so as to be rotatable, engage (come into press-contact with) the surface of the bar member at a high surface pressure, the rollers do not rotate by a large friction generated by its engagement (press-contact), so that the bar member is clamped and hence cannot be pulled out.

However, if a pulling force is increased significantly, the rollers may rotate, and a clamping force may be loosened in some cases. A "stepless clamping device" according to JP-A-63-285307 (Japanese Patent No.1794545) is also a clamping device using a chain, and the same problem as described above may occur.

### Cited References

### Patent Document

Patent Document 1: JP-A-59-69510
Patent Document 2: JP-A-63-285307

### DISCLOSURE OF INVENTION

### PROBLEM TO BE SOLVED BY THE INVENTION

In this manner, the clamping device using the chain is simple in structure and, in addition, is capable of clamping freely at arbitrary positions, and hence is highly useable. However, the clamping device using the chain still has a problem as described above. The problem to be solved by the present invention is this problem, and it is an object of the invention to provide a clamping device using a chain which is capable of clamping a bar member inserted through a through hole bent into a saw-tooth shape and achieving stable clamping.

### MEANS FOR SOLVING THE PROBLEM

A basic structure of a clamping device using a chain according to the present invention is the same as that in the prior art, in which a plurality of inner link plates and a plurality of outer link plates are connected so as to be bendable via pins, and a bar member is inserted through a through hole formed by the inner link plates and the outer link plates being bent into a saw-tooth shape. However, in the present invention, bushes are not used, and the bar member is clamped by the pins or cylindrical rollers axially supported by the pin by inserting the pins therethrough coming into press contact therewith. The bar member to be clamped may be an elongated member having a rectangular shape in cross section, an elongated member having a circular shape in cross section, or an elongated member having other shapes in cross section.

Here, each of the pins is fitted to a pin hole provided on the inner link plate in a rotatable state and is fixed to a pin hole on the outer link plate so as not to be disconnected by being caulked after having press-fitted. However, if a strong tensile force is exerted to the bar member, the caulk may be loosen to allow the rotation. Therefore, in the present invention, the pin has a non-circular shape in cross section instead of a circular shape. For example, an oval shape extremely close to a perfect circle or an ellipse shape extremely close to a perfect circle may be employed.

Then, a portion coming into contact with the bar member may be formed into an eccentric shape with respect to a shaft portion. Also, when supporting the rollers axially on the pin, by using the roller having a shape in which the center of an outer periphery of the roller is deviated from the center of a hollow portion of the cylindrical roller, the rotation of the roller is blocked. In this case, the pin does not necessarily have to be caulked or fixed to the outer link plate.

On the one hand, a material superior in resiliency is employed as the material of the pins, so that the bending deformation is achieved by bringing the pins into press contact with the bar member when clamping. The material of the chain has resiliency because it is originally a metal. In the prevent invention, superior resiliency is achieved in comparison with the material of the pin constituted as the power transmitting chain in the prior art.

### ADVANTAGES OF INVENTION

In this manner, the clamping device according to the present invention includes the chain having a structure in which the inner link plates and the outer link plates are connected via the pins so as to be bendable, and the pins are not fitted with the bush, so that the size of the through holes formed by being bent into the saw-tooth is increased, and hence the thickness of the bar member which can be inserted therethrough is increased. This results in reduction of size of the inner and outer link plates, that is, of the chain size, so that a compact clamping device is achieved.

Further, since the cross-section of the pin which connects each of the link plates is not a complete perfect circle and, for example, is an oval cross-section or an ellipse cross-section close to the perfect circle, and also a contact portion which comes into contact with the bar member is eccentric, pins press-fitted and caulked into pin holes of the outer link plates do not rotate. Therefore, loosening of the clamping force is avoided, and the bar member inserted through the through hole can be clamped firmly.

Furthermore, when supporting the roller axially on the pin, by using the roller having a shape in which the center of an outer periphery of the roller is deviated from the center of a hollow portion of the roller, the rotation of the roller is blocked in a clamped state, so that a strong clamping is achieved. On the other hand, by providing the pin with resiliency, the pin coming into press contact with the bar member is bent and hence the pin hole is work hardened, and hence the rotation of the pin is blocked and consequently a strong and stable clamping is achieved.

### BRIEF DESCRIPTION OF DRAWINGS

Fig. 1A is a side view showing an embodiment of a clamping device using a chain according to the present invention.
Fig. 1B is a plan view showing the embodiment of the clamping device using the chain according to the present invention.
Fig. 2 is a schematic side view showing a state of clamping a bar member using oval pins.
Fig. 3A is a perspective view showing a detailed example of the eccentric pin.
Fig. 3B is a front view showing the detailed example of the eccentric pin.

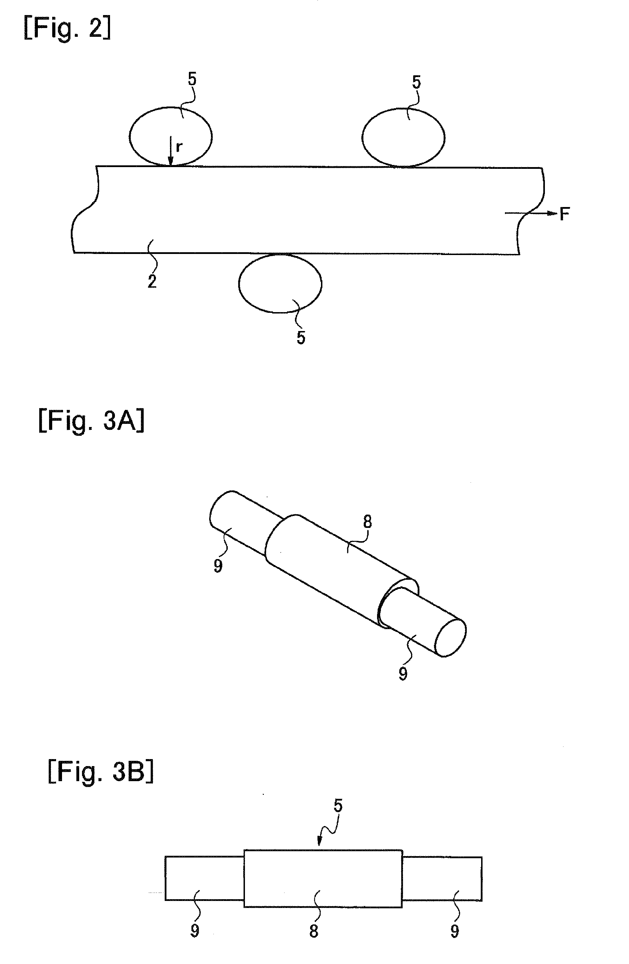

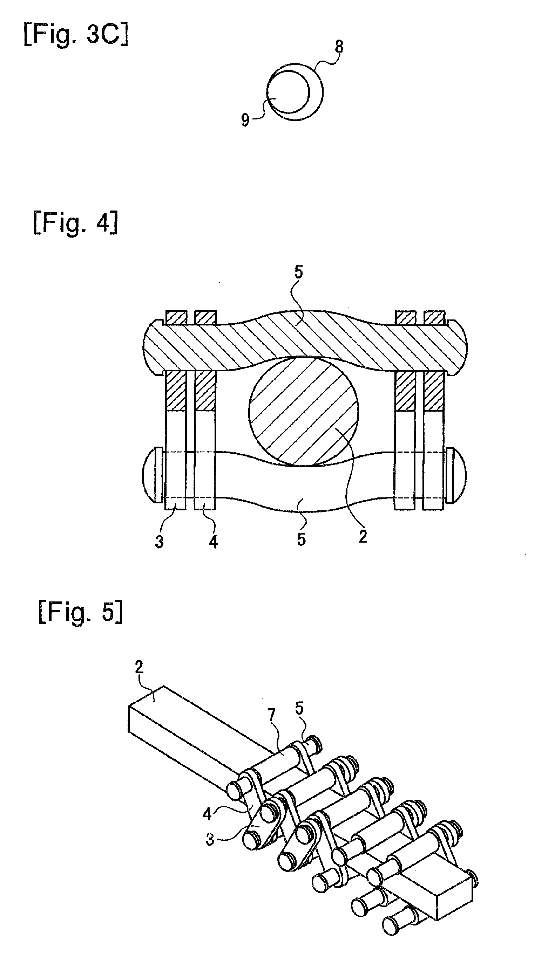

Fig. 3B is a side view showing the detailed example of the eccentric pin.
Fig. 4 is a cross-sectional view showing a state in which the pins clamp the bar member in a bent and deformed state.
Fig. 5 is a perspective view showing an embodiment of the clamping device using the chain in which rollers are axially supported by the pins according to the present invention.

### BEST MODE FOR CARRYING OUT THE INVENTION

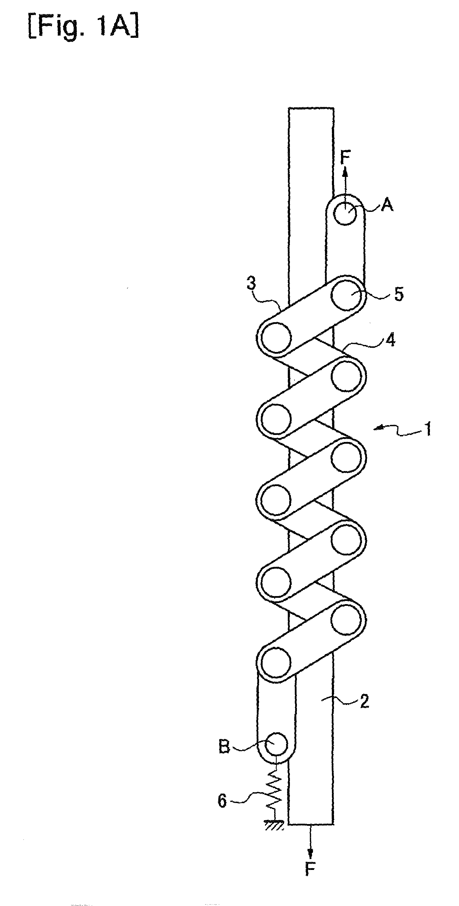

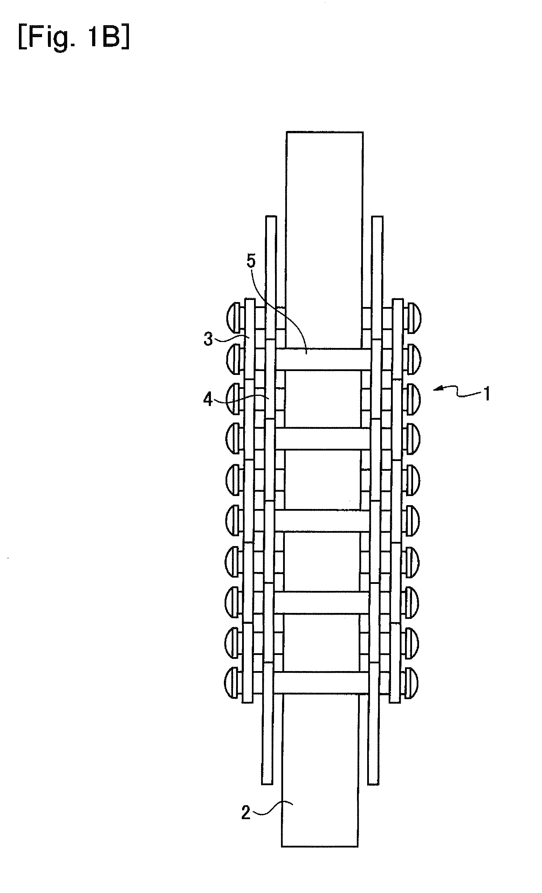

Fig. 1A and Fig. 1B are a side view and a plan view showing an embodiment of a clamping device using a chain according to the present invention. The clamping device includes a chain 1 and a bar member 2, and said chain 1 is a multi-joint member including outer link plates 3,3..., inner link plates 4, 4... connected via pins 5, 5... so as to be bendable. The chain 1 is bent into a saw-tooth shape as shown in the same drawing, and forms a through hole in the longitudinal direction by being bent. Therefore, the bar member 2 is inserted through this through hole.

In this state, if an end A of the chain 1 is fixed and a tensile force F is applied to the bar member 2 passed therethrough toward a free end B opposite from the one end A, the pins 5, 5... of the chain 1 engages the bar member 2, and hence the bar member 2 is clamped. In other words, if the bar member 2 tries to move toward the free end B, the pins 5, 5... are pulled in response to a friction, so that the chain 1 is slightly expanded.

Consequently, the distance between the pins 5, 5... arranged on both sides of the bar member 2 is reduced, and the pins 5, 5... come into press contact with the surface of the bar member 2. Therefore, a large frictional force on the basis of this press contact is generated, and hence the bar member 2 is clamped without being pulled out from the through hole. Here, it is recommended to connect a coil spring 6 to the free end B of the chain 1 and exert a spring force so as to expand the chain 1 by the coil spring 6.

In other words, the chain 1 is expanded by constantly exerting the spring force, and the pins 5, 5... are maintained in a state of being in abutment with the surface of the bar member 2 and, at the same time as the application of the tensile force F on the bar member 2, clamping is achieved without any slipping. As a matter of course, the spring force to be exerted is not limited to the above-described coil spring 6, and may be any member as long as it is an expandable resilient member such as a leaf spring.

Incidentally, the clamping device using the chain shown in Fig. 1Aand Fig. 1B is common to the clamping device in the prior art in terms of basic action principle although the structure is different. In the clamping device of the prior art, bushes are fitted on an outer peripheries of the pins of the chain and rollers are axially supported on a outer peripheries of the bushes so as to be rotatable, so that the size of the through hole is reduced with respect to the chain having the same pitch and the bar member 2 which can be inserted therethrough is limited to be thin. However, in the present invention, this point is overcome.

Also, since the rollers are not axially supported, the rotation of the rollers in a clamped state does not occur. However, there is no guarantee that the pins press-fitted and caulked into the pin holes on the outer rink plates are never rotated. Therefore, in the present invention, non-perfect circle is employed as the cross-section of a pin instead of the perfect circle. For example, by employing pins having an oval cross section or pins having an ellipse cross section, the pins 5, 5... brought into press contact with the bar member 2 once do not rotate.

Fig. 2 shows a state in which the oval-shaped pins 5, 5... are in press contact with the surface of the bar member 2 in the orientation in which a contact radius r becomes small. The pins 5, 5... cannot rotate because of their oval cross section. In other words, when the pins 5, 5... having the oval cross section are in press contact in the direction in which the contact radius r becomes small as shown in the same drawing, if the pins 5, 5... try to rotate in response to the bar member 2 being pulled, the contact radius r is increased and hence the rotation is blocked.

In contrast, when the pins 5, 5... come into press contact in a state in which the contact radius r is large, the pins 5, 5... rotate naturally by the pressure applied between the pins 5, 5... and the bar member 2 and hence the orientation in which the contact radius r is small as shown in Fig. 2 is assumed. Then, all the pins 5, 5... are stabilized in the orientation in which the contact radius r is small, and then the pins 5, 5... cannot be rotated any longer. Here, the cross-section of the pins 5, 5... is not limited to the oval shape, and the case of the pins 5, 5... having the ellipse cross section is also the same.

It is also possible to employ the pins 5, 5... having a polygonal cross section in some cases. Therefore, when assembling the chain 1, the orientation of the pins 5, 5... does not have to be taken into consideration, and it is not necessary to caulk firmly in order to prevent the pins 5, 5... press-fitted into the outer link plates 3, 3... from rotating.

Fig. 3A to Fig. 3C are a perspective view, a front view, and a side view showing a detailed example of a case where the pin 5 is eccentric, in which shaft portions 9, 9 are provided on both sides of a contact portion 8, and the contact portion 8 has a shape eccentric with respect to the shaft portions 9, 9. The shaft portion 9 is fitted into the pin holes of the outer link plate 3 and the inner link plate 4, the contact portion 8 is an area coming into press contact with the bar member 2, and by the contact portion 8 being eccentric in this manner, the rotation is prevented in the same manner as the case of the oval pin 5 shown in Fig. 2 described above.

On the other hand, as another method of preventing the pins 5, 5... from rotating in a state of being in press contact with the bar member 2, it is achieved by bending and deforming (flexurally deforming) the pins 5, 5.... In order to do so, a material superior in resiliency (spring member) is used for the pins 5, 5... and the pins 5, 5... can be bent and deformed by being brought into press contact with the bar member 2. In this manner, if the pins 5, 5... are bent and deformed, a larger torque is required for the pins 5, 5... to rotate in a bent state than being rotated in a straight state.

Fig. 4 shows a bending deformation of the pins 5, 5 in a case where the bar member 2 is clamped by the pins 5, 5. In this manner, the rotation is blocked by bending of the pins 5, 5..., and a strong clamp is achieved. Also, by bending of the pins 5, 5..., the pin holes which support the pins 5, 5... are also deformed and work hardened, whereby the pins 5, 5... can hardly be rotated. Incidentally, according to the clamping device using the chain in the present invention, the chain bent into the saw-tooth shape is stored in a case, and the one end A thereof is fixed to the case. Then, a coil spring is connected between the free end B and the case.

Fig. 5 shows a case where the rollers 7 are axially supported by the pin 5 according to another embodiment of the present invention. Although the basic structure is common to the case of the clamping device shown in Fig. 1A and Fig. 1B described above, the rollers 7 are axially supported by the pins 5 so as to be freely rotatable. Then, the pins 5 are not caulked or fixed by the outer link plates 3 and are mounted in a state of rotation free, but has a configuration in which the rollers 7 do not rotate when the bar member 2 is clamped. In other words, the rollers 7 each have a shape in which the center of an outer periphery of the roller is eccentric with respect to the center of a hollow portion of the roller, and cannot rotate in the state of being press contact with the bar member 2.

The structure in which the eccentric roller 7 is fitted to the pin 5 is the same as the case of the eccentric pin 5 shown in Fig. 3A to Fig. 3C, and the contact portion 8 corresponds to the roller 7. Incidentally, in order to embody the clamping device of the present invention, it is stored in the case. In order to allow the bar member to be inserted through the through hole formed on the chain bent in the saw-tooth shape, a hole is also provided in the case. Then, the case and the bar member are changed variously depending on the application of the clamping device. For reference sake, although an elongated member having a rectangular cross section as shown in Fig. 1A, Fig. 1B, and Fig. 5 or an elongated member having a circular cross section as shown in Fig. 4 and so on are exemplified as the bar member to be clamped, the invention is not limited thereto, and elongated members having any cross section may be employed.

### INDUSTRIAL APPLICABILITY

The clamping device using the chain according to the present invention is effective as the device that clamps the bar member as an elongated member having various cross sections.

### REFERENCE NUMERALS

- 1: chain
- 2: bar member
- 3: outer link plate
- 4: inner link plate
- 5: pin
- 6: coil spring
- 7: roller
- 8: contact portion
- 9: shaft portion
- A: one end of chain
- B: free end of chain

## Claims

1. A clamping device using a chain, in which a bar member is inserted through a through hole formed by bending the chain including inner link plates and outer link plates connected via pins so as to be freely bendable into a saw-tooth shape and is clamped by the pins, one end (A) of the chain is fixed, and the bar member is blocked from being pulled toward the other free end (B), **characterized in that** the pin has a non-circular shape in cross section.

2. The clamping device using the chain according to Claim 1, wherein the pin has an oval shape in cross section.

3. The clamping device using the chain according to Claim 1, wherein the pin has an ellipse shape in cross section.

4. A clamping device using a chain, in which a bar member is inserted through a through hole formed by bending the chain including inner link plates and outer link plates connected via pins so as to be freely bendable into a saw-tooth shape and is clamped by the pins, one end (A) of the chain is fixed, and the bar member is blocked from being pulled toward the other free end (B), **characterized in that** contact portions of the pins which come into contact with the bar member are eccentric with respect to a shaft portion fitted into a pin hole of the inner and outer link plates.

5. A clamping device using a chain, in which a bar member is inserted through a through hole formed by bending the chain including inner link plates and outer link plates connected via pins so as to be freely bendable into a saw-tooth shape and is clamped by rollers axially supported by the pins, one end (A) of the chain is fixed, and the bar member is blocked from being pulled toward the other free end (B), **characterized in that** the rollers axially supported by the pins have a shape in which the center of an outer periphery of the roller is eccentric with respect to the center of a hollow portion of the roller.

6. A clamping device using a chain, in which a bar member is inserted through a through hole formed by bending the chain including inner link plates and outer link plates connected via pins so as to be freely bendable into a saw-tooth shape and is clamped by the pins, one end (A) of the chain is fixed, and the bar member is blocked from being pulled toward the other free end (B), **characterized in that** the material of the pin is a spring member superior in elasticity.
